(19) Europäisches Patentamt
European Patent Office
Office européen des brevets

(11) **EP 4 606 780 A1**

(12) **EUROPEAN PATENT APPLICATION**

(43) Date of publication:
**27.08.2025   Bulletin 2025/35**

(21) Application number: **24159288.0**

(22) Date of filing: **23.02.2024**

(51) International Patent Classification (IPC):
**C03C 3/093** (2006.01)    **C03B 5/16** (2006.01)
**C03C 27/02** (2006.01)    **C03B 17/04** (2006.01)

(52) Cooperative Patent Classification (CPC):
**C03C 3/093; C03B 5/16; C03B 17/04; C03C 27/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **SCHOTT AG**
**55122 Mainz (DE)**

(72) Inventors:
• **HEINL, Sebastian**
**95666 Mitterteich (DE)**

• **BRONNBAUER, Carina**
**95666 Mitterteich (DE)**
• **PETERSHANS, Andre**
**95666 Mitterteich (DE)**
• **LIPPERT, Hans**
**95666 Mitterteich (DE)**
• **DEBRECZENY, Csaba**
**95666 Mitterteich (DE)**

(74) Representative: **Schott Corporate IP**
**Hattenbergstraße 10**
**55122 Mainz (DE)**

(54) **GLASS ROD, SET OF GLASS RODS, USE OF A GLASS ROD AND METHOD OF MANUFACTURING A GLASS ROD**

(57)     This disclosure relates to a glass rod, a set of glass rods, use of a glass rod and a method of manufacturing a glass rod. The glass rods according to this disclosure are suitable for use in products based on transition glasses. The method of manufacturing a glass rod according to this disclosure minimises and/or avoids defects in the glass and the final glass product, that are apparent in subsequent use and subsequent manufacturing steps.

Fig. 3

EP 4 606 780 A1

**Description**

This disclosure relates to a glass rod, a set of glass rods, use of a glass rod and a method of manufacturing a glass rod. The glass rods according to this disclosure are suitable for use in products based on transition glasses. The method of manufacturing a glass rod according to this disclosure minimises and/or avoids defects in the glass and the final glass product that are apparent in subsequent use and subsequent manufacturing steps.

Background

Transition glasses are highly specialised glass compositions adapted and designed for use in flash lamps. Flash lamps are employed in medical, industrial, and scientific devices. The glass composition used for the manufacture of flash lamps are subject to rapid and extreme temperature changes. Depending on the type and use of the flash lamp, temperatures may reach 700 °C or even higher temperatures. Flash lamps are typically built from a fused silica/quartz or borosilicate tube which is designed as a U-shape, wherein the two ends are integrated with metal electrodes. High-voltage electrical power is supplied via conductive supports which also function as a mount or lamp holder during operation. Transition glasses serve to connect the metal conductive supports of the metal electrodes to the tube wall of flash lamps, particularly to account for the different thermal coefficients of expansion of the metal and the glass forming the tube, in view of the large temperature changes during use. When flash lamps are in constant use, they undergo many hundreds of ignition and cooling cycles which leads to deterioration of the glass which may manifest itself in the form of a white layer on the glass. One particularly prominent problem that has been repeatedly observed is thermal fracturing of the glass in flash lamps.

Although transition glasses and products based thereon are known in the art, there is still room for improvement. It would especially be useful to have glass rods with reduced physical tensions during use, as these tensions may lead to mechanical failure.

Accordingly, there remains a need to provide a glass product, for example a glass rod which is suitable for, e.g., flash lamps and other products that repeatedly undergo rapid temperature changes, wherein the glass product minimises and or completely avoids thermal fracturing during the desired lifecycle of the product. Additionally, there remains a related need to provide a method of manufacturing for the glass product.

Summary of this disclosure

The claimed subject-matter meets the described demands.

In one aspect, this disclosure provides a glass rod having a length $l_{rod}$ from 100 to 1600 mm, and having a ratio $Zr_{max}/Zr_{avg}$ of a highest local concentration of $ZrO_2$ and an average $ZrO_2$ concentration of less than 8.0, wherein the highest local concentration of $ZrO_2$, $Zr_{max}$, is less than 5,500 ppm.

In a second aspect, this disclosure provides a set of glass rods, comprising at least 40 glass rods according to the first aspect.

In a third aspect, this disclosure provides a method of manufacturing a glass rod comprising the steps of:

- providing a reactor (1) comprising a lower drain opening (2) and one or more reactor walls surrounding a reactor volume; and

- heating glass raw material in the reactor to obtain a glass melt (3), wherein the glass melt (3) has a glass composition with a T4 temperature of 1400 °C or more, wherein T4 is the temperature at which the glass melt composition has a viscosity of $10^4$ dPa s; and

- heating the glass melt (3) at least partially to a temperature T2.5, defined as the temperature at which the glass melt (3) has a viscosity of $10^{2.5}$ dPa s, and holding this temperature for a holding time of at least 10 hours; and

- withdrawing the glass melt (3) from the reactor (1); and

- cooling and/or forming the glass melt (3) to obtain one or more glass rods (5) according to the first aspect.

In a fourth aspect, this disclosure relates to a method of manufacturing a glass rod comprising the steps of:

- providing a reactor (1) comprising a lower drain opening (2); and

- heating glass raw material in the reactor to obtain a glass melt (3), wherein the glass melt (3) has a glass composition with a T4 temperature of 1400 °C or more, wherein T4 is the temperature at which the glass melt composition has a viscosity of $10^4$ dPa s; and

- heating the glass melt (3) at least partially to a temperature T2.5, defined as the temperature at which the glass melt (3) has a viscosity of $10^{2.5}$ dPa s; and

- withdrawing the glass melt (3) from the reactor (1) at a withdrawal temperature and at a glass melt withdrawal rate; and

- cooling and/or forming the glass melt (3) to obtain a glass rod (5),

wherein

- only up to 90 vol.-%, preferably up to 70 vol.-% and most preferably up to 50 vol.-% of an initial glass melt volume are used for forming the glass melt into the glass rods, and/or

- the lower drain opening is arranged at a distance of at least 10 cm from the reactor walls, and/or

- the glass melt is not stirred during the holding time, and/or

- the glass melt is not stirred during withdrawal, and/or

- the reactor comprises a top heater, preferably a gas burner, arranged above a melt surface.

In a fifths aspect, this disclosure relates to a method of manufacturing a glass rod comprising the steps of:

- providing a reactor (1) comprising a lower drain opening (2); and

- heating glass raw material in the reactor to obtain a glass melt (3), wherein the glass melt (3) has a glass composition with a T4 temperature of 1400 °C or more, wherein T4 is the temperature at which the glass melt composition has a viscosity of $10^4$ dPa·s; and

- heating the glass melt (3) at least partially to a temperature T2.5, defined as the temperature at which the glass melt (3) has a viscosity of $10^{2.5}$ dPa s; and

- withdrawing the glass melt (3) from the reactor (1) at a withdrawal temperature and at a glass melt withdrawal rate; and

- cooling and/or forming the glass melt (3) to obtain a glass rod (5),

comprising

- discontinuing withdrawal of the glass melt (3) from the reactor (1) before 90 vol.-%, preferably 70 vol.-% and most preferably 50 vol.-% of an initial glass melt volume are withdrawn; and/or

- heating the glass raw material using a top heater, preferably a gas burner, arranged above a melt surface; and/or

- heating the glass melt using a top heater, preferably a gas burner, arranged above a melt surface; and/or

- withdrawing the glass melt (3) from the reactor comprises predominantly, particularly only, portions of glass melt (3) which have a distance of at least 5 cm from a wall of the reactor (1).

Transition glasses have very high characteristic glass temperatures, e.g., a T4 temperature of 1400 °C or more, wherein T4 is the temperature at which the glass melt composition has a viscosity of $10^4$ dPa·s. For their production, reactors made of refractory material are required. Different refractory materials are known in the prior art such as mullite based refractory materials or andalusite based refractory materials. However, these materials are not suitable for the production of transition glasses due to the very high characteristic glass temperatures. Therefore, high temperature refractory materials are used which are mechanically stable even at very high temperatures. These refractory materials typically comprise zirconium oxide and zirconium silicate. The inventors have established that while zirconium-based reactor materials can hardly be avoided in the design of reactors for the manufacture of transition glasses, entry and subsequent contamination of obtained glass products with zirconium was identified as a critical problem that led to major disadvantages in the obtained glass such as physical tensions in the glass leading to mechanical failure in the final product, particularly when undergoing rapid temperature changes.

The method of manufacturing a glass rod according to this disclosure solves the above-mentioned problem by minimising, or even avoiding, the entry of zirconium compounds and/or zirconium ions into the transition glass melt/ the transition glass and the obtained products thereof. For example, after preparing and homogenising the synthesised glass melt, the zirconium entry into the glass melt in form of zirconium compounds and/or zirconium ions can be reduced by ensuring that essentially no mixing is performed by mechanical agitation (for example stirring) of the glass melt after the step of heating the glass melt at least partially to a temperature T2.5 and/or during the step of withdrawing the glass melt from the reactor. In this context it should be understood that mechanical agitation is different to thermal convection (agitation due to thermal gradient within the glass melt) of the glass melt and natural flow of the glass melt (agitation due to turbulences during withdrawing the glass melt from the reactor). Reducing and especially avoiding mechanical agitation minimises and/or reduces the dissolution of zirconium from the reactor walls and uptake into the glass melt.

Without wishing to be bound by theory, a temperature profile across the reactor in a length dimension and a width dimension, both in horizontal directions, was found to drop towards the reactor walls, provided that mixing by agitation was kept to a minimum or avoided. A lower temperature of the glass melt at the interface with the reactor walls provides that less zirconium is dissolved from the walls and introduced into the glass melt. Alternatively, or additionally, upon withdrawing the glass melt from the reactor it may be advantageous to withdraw only portions of glass melt which have a distance of at least 5 cm from a wall of the reactor which thus minimises the potential uptake of zirconium emanating from the reactor walls. Simulations have established that neighbouring glass melt layers originate from the reactor walls towards a central part of the reactor, wherein the neighbouring glass melt layers have changing physical and chemical properties, in particular with respect to their $ZrO_2$ content.

Depending on the glass composition, the tendency of the melt to dissolve ZrOz from the reactor walls may vary. For example, aggressive glass melts such as sodium compounds comprising glass melts, with sodium compounds in an amount of at least 7 wt.-% may dissolve a substantial part of the reactor walls even at comparably lower temperatures. For very aggressive glass compositions, it may be necessary to employ more than one of the measures given above, e.g. position of lower drain opening, top burner, no stirring, not using the full glass melt volume etc.

The inventors found that keeping a ratio $Zr_{max}/Zr_{avg}$ of a highest local concentration of ZrOz and an average ZrOz concentration within certain thresholds will overcome shortcomings of the prior art. Without wishing to be bound by this theory, the inventors hypothesize that a large $Zr_{max}$ and $Zr_{max}/Zr_{avg}$ might cause local irregularities in the location of $Zr_{max}$ which in turn may lead to stresses within the glass that may ultimately lead to mechanical failure under the influence of rapid temperature changes. Products based on the transition glasses according to this disclosure displayed less cracks and mechanical failure after repeated and prolonged use under extreme and changing temperature conditions.

Brief description of the drawings

Figure 1 is a photography of a glass rod cross-section exhibiting an excessive $Zr_{max}$ concentration.

Figure 2 is a photography of a glass rod cross-section according to this disclosure.

Figure 3 is a sectional view of a batch reactor that can be used in the method of this disclosure.

Detailed description

$Zr_{max}$ is defined as a highest local concentration of $ZrO_2$ within the obtained glass rod. According to the present invention, the highest local concentration of $ZrO_2$ will be determined in one or more cross-sections of the glass rod, e.g. by LA-ICP-MS. LA-ICP-MS stands for Laser Ablation Inductively Coupled Plasma Mass Spectrometry. It is an analytical technique used to determine the elemental composition of solid samples. For example, according to this disclosure, $Zr_{max}$ is determined by measuring $ZrO_2$ concentrations in at least three, at least five, at least eight or at least ten cross-sections distributed equidistantly along the length of the glass rod. LA-ICP-MS combines two technologies: laser ablation, which uses a high-powered laser to remove (ablate) material from the sample's surface, and inductively coupled plasma mass spectrometry, which ionizes those materials and then uses mass spectrometry to detect and quantify their ions based on their mass-to-charge ratio. This method is widely used in geology, materials science, and the forensic analysis of trace elements because it allows for precise and minimally destructive sampling of a wide range of materials. A more detailed description of the method is given below.

The location of the highest local concentration of $ZrO_2$ might be determined by chromatic confocal thickness measurement which is known to the skilled person. In general, if the optical properties of the sample, refractive index and Abbe number, are known and homogeneous over the measured area, the thickness (z-value) can be calculated from the difference between the two distance measurements. Under the assumption that the absolute thickness is constant, the determined z-value is an indication of the wavefront deformation and is an indicator for different densities within the glass rod.

Alternatively, the central portion of the glass rod is scanned by several LA-ICP-MS measurements to locate the location of the highest local concentration of ZrOz.

In this disclosure, $Zr_{max}$ is less than 5,500 ppm, preferably less than 4,000 ppm, more preferably less than 3,000 ppm, even more preferably less than 2,000 ppm, and most preferably less than 1,000 ppm. In this disclosure, the unit "ppm" relates to mass by mass (m/m) if not expressly indicated otherwise. Optionally, $Zr_{max}$ may be at least 500 ppm, preferably at least 600 ppm, even more preferably at least 700 ppm. According to a preferred embodiment of the present disclosure, $Zr_{max}$ may range from 500 ppm to 5,500 ppm, preferably from 600 ppm to 4,000 ppm, and most preferably from 700 ppm to 3,000 ppm.

$Zr_{avg}$ is defined as an average $ZrO_2$ concentration of the glass rod. According to the present invention, $Zr_{avg}$ will be determined by LA-ICP-MS). Alternatively, the $Zr_{avg}$ can be determined by X-ray Fluorescence (XRF).

Quantitative analysis using X-ray Fluorescence (XRF) works by measuring the fluorescent (or secondary) X-ray emitted from a material when it is excited by being bombarded with high-energy X-rays or gamma rays. This technique is based on the principle that individual atoms, when excited by an external energy source, emit X-ray photons of a characteristic energy or wavelength. By measuring the intensity and energy of these emitted X-rays, one can determine the composition of the material. In this disclosure, Wavelength Dispersive XRF (WDXRF) is used. This method uses a crystal to diffract the X-rays at different angles depending on their wavelength. The intensity of the emitted X-ray at each energy (or wavelength) is proportional to the concentration of the corresponding element in the sample. By calibrating the XRF instrument with standards of known composition, the concentration of Zr in the sample can be quantified. XRF is performed on polished glass rod samples.

In embodiments of this disclosure, $Zr_{avg}$ is less than 4,000 ppm, preferably less than 3,500 ppm, more preferably less than 3,000 ppm, even more preferably less than 2,600 ppm, even more preferably less than 1,500 ppm, even more preferably less than 1,000 ppm, and most preferably less than 700 ppm. Optionally, $Zr_{avg}$ may be at least 200 ppm, preferably at least 300 ppm, more preferably at least 400 ppm, even more preferably at least 500 ppm. According to a preferred embodiment of the present disclosure, $Zr_{avg}$ may range from 200 ppm to <4,000 ppm, preferably from 300 ppm to <3,500 ppm, more preferably from 400 ppm to <2,600 ppm, and most preferably from 500 ppm to <1,000 ppm.

A "highest local concentration of $ZrO_2$" an "average $ZrO_2$ concentration" and an "$ZrO_2$ concentration" in the meaning of the present invention is the concentration of $Zr^{4+}$ ions and is standardised as the amount of the corresponding oxide. The $Zr^{4+}$ ions can be present in form of different compounds, for, example, zirconium dioxide or zirconium silicate.

In certain embodiments, a ratio $Zr_{max}/Zr_{avg}$ is less than 8.0, preferably less than 7.0, more preferably less than 5.0, and most preferably less than 3.0. Using the methods of this disclosure, this ratio can be kept in desirable limits. As discussed in more detail elsewhere herein, the technology of this disclosure avoids excessive $ZrO_2$ concentrations in the glass rods. In certain embodiments, the ratio $Zr_{max}/Zr_{avg}$ is >1.0, preferably at least 1.1, more preferably at least 1.5, and most preferably at least 2.0. According to a preferred embodiment of the present invention the $Zr_{max}/Zr_{avg}$ may range from >1.0 to 8.0, preferably from 1.5 to 7.0, and most preferably from 2.0 to 5.0.

According to a preferred embodiment of the present disclosure, the glass rod has an average $ZrO_2$ concentration $Zr_{avg}$ of at least 200 ppm, preferably from 300 ppm to 3,000 ppm, and/or a highest local concentration of $ZrO_2$, $Zr_{max}$ of less than 5,500 ppm preferably less than 2,000 ppm, even more preferably less than 1,000 ppm, and/or a $Zr_{max}/Zr_{avg}$ of less than 8.0, preferably less than 7.0, more preferably less than 5.0 and most preferably or less than 3.0.

According to another preferred embodiment of the present disclosure, the glass rod has an average $ZrO_2$ concentration $Zr_{avg}$ of at least 200 ppm, preferably from 300 ppm to 3,000 ppm, and a highest local concentration of $ZrO_2$, $Zr_{max}$ of less than 5,500 ppm preferably less than 2,000 ppm, even more preferably less than 1,000 ppm, and a $Zr_{max}/Zr_{avg}$ of less than 8.0, preferably less than 7.0, more preferably less than 5.0 and most preferably or less than 3.0.

Glass rods of this disclosure comprise a central portion and an edge portion, wherein the central portion is defined as the part of the rod located at a distance of less than ½ r from the mass center of a cross section of the rod, wherein r is the radius of the cross section, and wherein the edge portion is defined as the part of the glass rod located at a distance of at least ½ r from the mass center of the cross section of the rod. If the cross-section of the rod is not circular, r is the radius of a circle having the same area as the surface of the cross-section under consideration. In embodiments, a ZrOz concentration in the central portion of the glass rod is larger than a ZrOz concentration in an edge portion of the glass rod. For example, $Zr_{max}$ may be located in the central portion. This distribution of $ZrO_2$ concentrations in at least some glass rods of this disclosure is a result of the method of making the glass rods in $ZrO_2$-containing crucibles. It was found that highest concentrations of $ZrO_2$ may occur in the central portion of the glass rod due to the glass melt being drawn from the crucible through a drain opening.

Generally, glass rods of this disclosure may contain very minor amounts of other impurities, e.g. iridium, tungsten and/or molybdenum, that may enter the melt from electrodes or other parts of the crucible or furnace. To ensure that the glass rods exhibit the desired characteristics, including transmission, impurities should be kept to a minimum. In some embodiments of this disclosure, contaminations of molybdenum and/or tungsten may be avoided by not relying on molybdenum and/or tungsten and/or iridium electrodes for heating. Instead, a top heater may be used to heat the melt from above. In embodiments, the concentration of each of molybdenum, tungsten and/or iridium in the glass of the glass rod is less than 100 ppm, preferably less than 50 ppm, more preferably less than 30 ppm, and most preferably less than 10 ppm. In embodiments, the concentration of molybdenum in the glass of the glass rod is less than 100 ppm, preferably less than 50 ppm, more preferably less than 30 ppm, and most preferably less than 10 ppm. In embodiments, the concentration of tungsten in the glass of the glass rod is less than 100 ppm, preferably less than 50 ppm, even more preferably less than 30 ppm, and most preferably less than 10 ppm. In embodiments, the concentration of iridium in the glass of the glass rod is less than 100 ppm, preferably less than 30 ppm, even more preferably less than 10 ppm, and most preferably less than 5 ppm.

Keeping impurities and flaws at a low level helps achieve a high transmission. In embodiments, an transmission of the glass of the glass rod of this disclosure is at least 90%, preferably at least 92%, more preferably at least 95% and most preferably at least 97% measured over at least one wavelength in the range of 350 to 450 nm at a reference thickness of 10 mm. Optionally, an transmission of the glass of the glass rod of this disclosure is at least 90%, preferably at least 92%, more preferably at least 95% and most preferably at least 97% over the entire wavelength range of 350 to 450 nm at a reference thickness of 10 mm.

In an embodiment, this disclosure relates to a glass rod having a length $l_{rod}$ from 100 to 1600 mm, preferably from 200 to 1400 mm, more preferably from 300 to 1300 mm, and most preferably from 800 to 1100 mm. Optionally, the glass rod of this disclosure may have a length of at least 100 mm, preferably at least 200 mm, more preferably at least 300 mm, and most preferably at least 800 mm. The length of the glass rod may be up to 1600 mm, preferably up to 1400 mm, more preferably up to 1300 mm, and most preferably up to 1300 mm. It was found that these lengths are suitable for an economical way of production. Also, it is possible, with the methods of this disclosure, to keep the desirable homogeneity of properties within these lengths. In the meaning of the present disclosure the length of the rod is the distance between the two edges of the glass rod.

In an embodiment, this disclosure relates to a glass rod having a thickness from 2.0 to 5.0 mm, preferably from 2.2 to 4.5 mm, more preferably from 2.5 to 4.0 mm, and most preferably from 2.8 to 3.8 mm. Optionally, the glass rod of this disclosure may have a thickness of at least 2.0 mm, preferably at least 2.2 mm, more preferably at least 2.5 mm, and most preferably at least 2.8 mm. For example, the thickness of the glass rod may be up to 5.0 mm, preferably up to 4.5 mm, more preferably up to 4.0 mm, and most preferably up to 3.8 mm. It was found that these thicknesses are suitable for an economical way of production. Also, it is possible, with the methods of this disclosure, to keep the desirable homogeneity of properties within these thicknesses.

In the meaning of the present disclosure the thickness of the glass rod is 2 x r with r being the radius of the glass rod. In case the glass rod is elliptical the thickness of the glass rod is the diameter of the major axis.

As mentioned above, the products and methods of this disclosure provide for a very homogeneous distribution of composition and, hence, of properties. In an embodiment, the glass rod exhibits a homogeneity of average linear thermal expansion in a temperature range of from 30 to 300°C (hereinafter: $H_{CTE}$) of less than 0.08 ppm/K. This means that a difference of a maximum value and a minimum value of average linear thermal expansions measurable in the glass rod is below the indicated threshold. Keeping the variability of thermal expansion in the glass rod low, will help achieve a good resistance of the glass rod to repeated temperature changes. Measurement of the average linear thermal expansion of glass also known as average linear coefficient of thermal expansion is a routine measurement and known by the skilled person. It is measured in the temperature range of 20 to 300 °C and determined according to ISO 7991:1987. Optionally, $H_{CTE}$ may be less than 0.07 ppm/K, preferably less than 0.06 ppm/K. In embodiments, $H_{CTE}$ is from 0.001 to 0.08 ppm/K, preferably from 0.01 to 0.07 ppm/K, and most preferably from 0.02 to 0.06 ppm/K.

According to one embodiment the present disclosure relates to a glass rod according, wherein the length $l_{rod}$ is from 800 to 1100 mm, and/or the thickness of the glass rod is in the range of from 2.0 mm to 5.0 mm, and/or a homogeneity of average linear thermal expansion in a temperature range of from 30 to 300°C is less than 0.08 ppm/K.

According to another embodiment the present disclosure relates to a glass rod according, wherein the length $l_{rod}$ is from 800 to 1100 mm, and the thickness of the glass rod is in the range of from 2.0 mm to 5.0 mm, and a homogeneity of average linear thermal expansion in a temperature range of from 30 to 300°C is less than 0.08 ppm/K.

This disclosure also relates to a set of glass rods of this disclosure. The properties of the glass rod disclosed herein are obtained reliably, which means for a significant number of rods. Thus, sets of glass rods are available, wherein the glass rods have a length $l_{rod}$ from 100 to 1600 mm, and have a ratio $Zr_{max}/Zr_{avg}$ of a highest local concentration of $ZrO_2$ and an average $ZrO_2$ concentration of less than 8.0, wherein the highest local concentration of $ZrO_2$, $Zr_{max}$, is less than 5,500 ppm.

According to a preferred embodiment of the present disclosure, all of the glass rods in the set exhibit one or more or all of the preferred characteristics discussed in more detail in this disclosure. In an embodiment, this disclosure provides a set of glass rods. The set of glass rods, may be packaged, sold, shipped and/or used as a bundle. Optionally, the set of glass rods comprises at least 40, preferably at least 60, more preferably at least 80, and most preferably at least 100 glass rods of this disclosure. In embodiments, the set of glass rods comprises up to 2,000, preferably up to 1,000, even more preferably up to 500 and most preferably up to 200 glass rods of this disclosure. For example, the set may comprise from 40 to 2,000, preferably from 60 to 1,000, more preferably from 80 to 500 and most preferably from 100 to 200 glass rods of this disclosure.

In certain embodiments, a glass rod of this disclosure is used for joining a metal article to a glass element. For example, the average thermal expansion coefficient of the glass rod may be between that of the metal article and that of the glass element.

In one embodiment, the glass rod is characterised by one or more of the following properties:

- the number of bubbles is less than 10, less than 5, or less than 2,

   wherein the length of a bubble is at least 0.5 mm measured as the largest linear distance in the bubble; and/or

   the length of a bubble, measured as the largest linear distance in the bubble, is less than 70 mm, less than 50 mm, or less than 10 mm; and/or

- an absence of a stretch of bubbles of more than 100 mm, wherein the stretch of bubbles is defined as the occurrence of a sequence of bubbles disposed one after the other in glass rod length direction, the bubbles having a distance between two neighbouring bubbles which is less than the length of the bubble with the largest length in the sequence.

Individual bubbles may be observed by the naked eye, for example using a light table, and may be captured by photography. Individual bubbles may have an almost spherical shape, but may also appear as longitudinal, e.g. ellipsoid-shaped, bubbles, also referred to as airlines, whose length is measured along a longitudinal axis. Longitudinal bubbles may not have a geometrically well-defined shape and may thus be irregular in shape. A bubble is counted, provided that the length of a bubble is at least 0.5 mm measured as the largest linear distance in the bubble. If more than one bubble is observed, these may appear in the form of stretches.

In one embodiment, the glass rod has a number of bubbles of less than 10, preferably less than 5, more preferably less than 2, wherein the length of a bubble is at least 0.5 mm measured as the largest linear distance in the bubble. According to another preferred embodiment the glass rod does not comprise bubbles, wherein the length of a bubble is at least 0.5 mm measured as the largest linear distance in the bubble.

In one embodiment, the glass rod, optionally obtained by the process, has a coefficient of thermal expansion in the temperature range from 20 °C to 300 °C of 0.8 ppm/K to 4.5 ppm/K. In one embodiment, the glass rod has a thermal expansion of at least 0.95 ppm/K, at least 1.00 ppm/K, at least 1.05 ppm/K, at least 1.10 ppm/K, at least 1.20 ppm/K, or at least 1.50 ppm/K. In one embodiment, the glass rod has a thermal expansion 3.20 ppm/K or less, 3.00 ppm/K or less, 2.70 ppm/K or less, 2.20 ppm/K or less, 2.00 ppm/K or less. In one embodiment, the glass rod has a thermal expansion of 0.95 ppm/K to 3.20 ppm/K, 1.00 ppm/K to 3.00 ppm/K, 1.05 ppm/K to 2.70 ppm/K, 1.10 ppm/K to 2.20 ppm/K, 1.20 ppm/K to 2.20 ppm/K, 1.50 ppm/K to 2.00 ppm/K.

The water content may be determined by IR spectrometry based on the OH-stretching vibration at about 2700 nm, for example with a commercially available Nicolet FTIR spectrometer. The absorption in the wavelength range from 2500 to 6500 nm may be measured first and the absorption maximum may then be determined at about (or in the range of) 2700 nm. The absorption coefficient $\alpha$ is calculated based on the sample thickness d, the internal transmittance $T_i$ and the reflection factor P using the following equation:

$$\alpha = 1/d * \lg(1/T_i) \ [cm^{-1}],$$

wherein $T_i = T/P$, wherein T denotes the transmission. The water content is then obtained by

$$c = \alpha/\varepsilon,$$

wherein $\varepsilon$ denotes the extinction coefficient. For a water content in the range of 25 to 80 mmol/l $\varepsilon$ = 110 l mol$^{-1}$ cm$^{-1}$ (H. Frank and H. Scholze, "Glastechnische Berichte", vol. 36, issue 9, page 350).

In one embodiment, the glass article has a relative water content deviation of at most 10%, at most 8%, at most 6%, at most 4%, or at most 2% and/or at most 5 mmol/l, at most 4 mmol/l, at most 3 mmol/l, at most 2 mmol/l, or at most 1 mmol/l. In one embodiment, the glass article has a relative water content deviation of at least 0.2%, at least 0.4%, at least 0.6%, at least 0.8%, or at least 1.0% and/or at least 0.1 mmol/l, at least 0.2 mmol/l, at least 0.3 mmol/l, at least 0.4 mmol/l, or at least 0.5 mmol/l.

In one embodiment the invention relates to a set of glass articles, wherein each of the articles has a water content of at least 35 mmol/l, at least 40 mmol/l, at least 45 mmol/l, at least 50 mmol/l, or at least 55 mmol/l and/or a water content of 250 mmol/l or less, 200 mmol/l or less, 150 mmol/l or less, 125 mmol/l or less, or 100 mmol/l or less. Accordingly, in one embodiment, a set of glass articles is provided, wherein each of the articles has a water content of 35 to 250 mmol/l, 40 to 200 mmol/l, 45 to 150 mmol/l, 50 to 125 mmol/l, or 55 to 100 mmol/l.

Advantageously, a water content of at least 35 mmol/l, or at least 55 mmol/l, may help to reduce glass fracture and/or the occurrence of glass anomalies upon repeated and multiple (re)heating and/or manufacturing of the glass.

**Method**

The method of this disclosure comprises the steps of

- providing a reactor (1) comprising a lower drain opening (2) and one or more reactor walls surrounding a reactor volume;

- heating glass raw material in the reactor to obtain a glass melt (3), wherein the glass melt (3) has a glass composition with a T4 temperature of 1400 °C or more, wherein T4 is the temperature at which the glass melt composition has a viscosity of $10^4$ dPa·s;

- heating the glass melt (3) at least partially to a temperature T2.5, defined as the temperature at which the glass melt (3) has a viscosity of $10^{2.5}$ dPa s, and optionally holding this temperature for a holding time of at least 10 hours;

- withdrawing the glass melt (3) from the reactor (1); and

- cooling and/or forming the glass melt (3) to obtain one or more glass rods (5).

The method of this disclosure may be performed batch-wise. This means that the steps heating the glass raw material, heating the glass melt, withdrawing the glass melt and obtaining the glass rods may be performed repeatedly.

In an embodiment, only up to 90 vol.-%, preferably up to 70 vol.-%, more preferably up to 60 vol.-%, and most preferably up to 50 vol.-% of the glass melt volume are used for forming the glass melt into glass rods. Generally, the skilled person, having the benefit of this disclosure, will be able to determine the amount of glass melt that can be used for making the superior glass rods of this disclosure depending on the size of the reactor, the aggressiveness of the glass melt, melting temperatures etc. However, for economic reasons, it will be useful to use at least 25 vol.-%, preferably at least 30 vol.-% and most preferably at least 35 vol.-% of the initial glass melt volume for the superior glass rods of this disclosure. This does not necessarily mean that the reast of the glass melt is disposed of. The rest of the melt can still be used for making glass rods for different purposes that do not require the superior quality discussed herein. Still, optionally, the method may include the step of discontinuing withdrawal of the glass melt from the reactor before 90 vol.-%, preferably 70 vol.-%, more preferably 60 vol.-% and most preferably 50 vol.-% of the initial glass melt volume are withdrawn. The initial volume of the glass melt is the volume of the melt after raw materials are completely molten, i.e. in a liquid state.

According to one embodiment, in order to reduce the amount of wall material and, hence, zirconium compounds such as zirconium dioxide and/or zirconium silicate entering the melt, it is advisable to arrange the lower drain opening at a distance of at least 10 cm, preferably at least 15 cm, more preferably at least 20 cm and most preferably at least 25 cm from the walls of the reactor. Typically, it will be useful to arrange the lower drain opening approximately in the middle of the reactor bottom. The distance may be the shortest distance between a wall of the reactor and the lower drain opening. The lower drain opening may comprise a nozzle, which is often called "die". The die can be chosen to be free of Zr. In an embodiment, withdrawing the glass melt from the reactor comprises predominantly, particularly only, portions of glass melt which have a distance of at least 5 cm, preferably at least 10 cm and most preferably at least 15 cm from a wall of the reactor. As the reactor walls are a source of $ZrO_2$ concentration in the glass melt, withdrawing glass melt mainly from melt portions with a distance from the walls helps achieve the desirably low levels of contamination. Generally, the melt portions withdrawn from the melt can be influenced by the heating means, the position of the lower drain opening, stirring and melt viscosity.

In preferred embodiments, the glass melt is not agitated mechanically, for example by stirring, during the holding time and/or during withdrawal. Often, the glass maker will stir a glass melt for homogenization. The inventors surprisingly found that stirring will increase the amount of zirconium compounds such as zirconium dioxide and/or zirconium silicate entering the melt from the walls of the reactor. Hence, reducing or avoiding mechanical agitation such as stirring leads to low levels of $ZrO_2$ concentration in the glass melt according to this disclosure. Stirring during the initial melting phase may be avoided as well. However, some stirring during initial melting (before the glass raw material is completely melted) may be acceptable to help start the melt.

For example, after preparing and homogenising the synthesised glass melt, the zirconium entry into the glass melt in form of zirconium compounds and/or zirconium ions can be reduced by ensuring that essentially no mixing is performed by mechanical agitation (for example stirring) of the glass melt after the step of heating the glass melt at least partially to a temperature T2.5 and/or during the step of withdrawing the glass melt from the reactor.

As discussed above, the method of the present disclosure includes heating the glass melt at least partially to a temperature T2.5, and holding this temperature for a holding time of at least 10 hours. Optionally, this temperature can be held for longer, for example at least 15 hours, at least 20 hours, at least 25 hours or at least 30 hours. In embodiments, the holding time is up to 200 hours, for example up to 150 hours, up to 100 hours, or up to 72 hours. For example, the holding time may range from 10 hours to 200 hours, preferably from 15 hours to 150 hours, more preferably from 20 hours to 100 hours, and most preferably from 25 hours to 72 hours. Applying a rather long holding time may allow the melt to homogenize slowly even in the absence of stirring.

To reduce the amount of zirconium dioxide and/or zirconium silicate in the glass melt, a top heater may be used, i.e. a heater arranged above the melt surface of the glass melt. The top heater may for example be a gas burner, e.g. burning natural gas, other fossil fuel and/or hydrogen. Without being bound to any theory, the inventors take the position that using a top heater will help achieve a temperature profile with colder temperatures close to the walls and higher temperatures closer to the centre of the reactor volume. A lower temperature close to the walls will cause the glass melt in that part to be more viscous, flowing more slowly and therefore picking up less wall material. Thus, according to a preferred embodiment, the method includes heating the glass raw material using a top heater, preferably a gas burner, arranged above a melt surface. Optionally, the method may include heating the glass melt using a top heater, preferably a gas burner, arranged above a melt surface.

The reactor may comprise refractory material, wherein the refractory material comprises zirconium oxide and/or zirconium silicate, wherein optionally the melting furnace is essentially free of molybdenum and/or tungsten and/or iridium. In an embodiment, a contact surface of the reactor, with which the glass melt is in contact, comprises at least 30 wt.%, at least 50 wt.% or at least 70 wt.% of zirconium containing material. Zirconium containing material may be selected from zirconia and zirconium silicate. Optionally, the reactor comprises 30 wt.% or more contact material in the form of a cast zirconia material comprising more than 70 wt.% $ZrO_2$ and/or a contact surface of the reactor, with which the glass melt is in contact, comprises sintered material with more than 80 wt.%, more than 90 wt.%, or more than 95 wt.% zirconium silicate.

In an embodiment, the reactor has an inner length of at least 200 mm, preferably at least 400 mm, and most preferably at least 600 mm, wherein the inner length refers to the largest dimension measured in a horizontal direction within the reactor. The reactor may have an inner width of at least 200 mm, preferably at least 300 mm, and most preferably at least 400 mm, wherein the inner width refers to the largest dimension measured in a horizontal direction within the reactor and in an orthogonal direction with respect to the straight line defining the inner length.

The reactor may have an inner height of at least 100 mm, preferably at least 120 mm, and most preferably at least 150 mm, wherein the inner height refers to the vertical distance between a deepest point of the reactor and a highest point of the reactor measured in a vertical direction.

In the method, the reactor may comprise a glass raw material weight, in particular prior to heating, of at least 30 kg, at least 40 kg, at least 55 kg, or at least 70 kg. Additionally or alternatively in the method, the reactor may comprise an initial glass melt weight, which is defined as the glass melt weight after melting the glass raw material completely but before withdrawing the melt, of at least 30 kg, preferably at least 40 kg, more preferably at least 55 kg, and most preferably at least 70 kg.

Before withdrawing the glass melt from the reactor the glass melt may be cooled to a lower temperature. For example, the glass melt may be cooled to a temperature of T3 or to a temperature of T4. In a preferred embodiment, cooling of the glass melt occurs by reducing and or avoiding further heating of the glass melt in the reactor.

In an embodiment, the step of withdrawing the glass melt from the reactor occurs at a withdrawal temperature of T3 or higher, wherein T3 is the temperature at which the glass melt composition has a viscosity of $10^3$ dPa·s. Glass melt withdrawal from the reactor is performed via the drain opening.

In a preferred embodiment, the step of withdrawing the glass melt from the reactor occurs at a withdrawal temperature of T4 or higher, but below T3, wherein T4 is the temperature at which the glass melt composition has a viscosity of $10^4$ dPa·s. Glass melt withdrawal from the reactor is performed via the drain opening.

According to another preferred embodiment the step of withdrawing the glass melt from the reactor occurs at a withdrawal temperature of at least 50 °C above T4, preferably between 50 to 130 °C above T4.

In an embodiment, the method includes adjusting the withdrawal temperature. Adjustment of the withdrawal temperature is performed in order to control the glass melt withdrawal rate with a tolerance of 2% or less, or 1% or less. The withdrawal temperature of the glass melt may be measured by an IR pyrometer (6). The withdrawal temperature according to the present disclosure is measured by an IR pyrometer within the furnace and is measured at a defined point on the surface of the sidewall, wherein the defined point lies above the surface of the glass melt.

Optionally, the method may include adjusting a pressure above the glass melt. Adjustment of the pressure above the glass melt is performed in order to control the glass melt withdrawal rate with a tolerance of 2% or less, preferably of 1% or less. Adjusting a pressure above the glass melt may include safeguarding a hermetic seal of the reactor and/or employing pressurised air to compensate for the pressure decay at the lower drain opening. Preferably, the pressure above the glass melt is measured by a pressure sensor. Such sensors are known to the skilled person and commercially available. The pressure above the glass melt thus refers to conditions in the reactor and above the glass melt.

The glass melt withdrawal rate from the reactor quantifies the amount of glass melt leaving the reactor per time unit and is expressed as a volume flow rate in $ml \cdot min^{-1}$.

Optionally, the process for the production of a glass rod provides a glass rod or a set of glass rods according to this disclosure.

In one embodiment, the reactor is a batch-type reactor. In an alternative embodiment, the reactor is a continuous reactor. Preferably, the reactor is a batch-type reactor.

In one embodiment, heating glass raw material in the reactor to obtain a glass melt comprises providing a batch of oxides or other suitable glass raw materials, wherein the oxides may be selected from the list of $SiO_2$, $B_2O_3$, $Al_2O_3$, one or more alkali earth metal oxides, and one or more alkali metal oxides, and heating the batch until melting. According to a preferred embodiment the batch of oxides is selected from the group consisting of $SiO_2$, $B_2O_3$, $Al_2O_3$, one or more alkali earth metal oxides, and one or more alkali metal oxides.

In one embodiment, the glass melt is heated at least partially to a temperature T2.5, defined as the temperature at which the glass melt has a viscosity of $10^{2,5}$ dPa·s. A melting temperature T2.5 may provide for a sufficiently low viscosity and may thus enable uniform distribution of the oxides provided with the raw material to obtain a homogeneous glass melt.

In one embodiment, the glass melt is heated at least partially to a temperature T2.3. Alternatively, in one embodiment, the glass melt is heated at least partially to a temperature T2.1 or less. Alternatively, in one embodiment, the glass melt is heated at least partially to a temperature of T2.5 to T2.1.

In one embodiment, the step heating the glass melt at least partially to a temperature T2.5 is carried out in a batch reactor or a continuous reactor for a time sufficient to establish a homogeneous glass melt. Depending on the chosen raw material, and the reactor type (continuous or batch), the skilled person knows how to establish a temperature T2.5 in order to obtain a homogeneous glass melt. In one embodiment, the entire glass melt in the reactor is heated to a temperature T2.5. In one embodiment, the entire glass melt in the reactor is heated to a temperature of T2.5 to 2.1. The temperature in the reactor may be assessed and or controlled using suitable temperature probes that are able to operate at the high temperatures required for the glasses according to the invention.

It is preferred that the glass melt viscosity will not be less than 100 dPa s. Heating the glass to very low viscosities increases erosion of the melting tank walls and may potentially introduce impurities in the glass composition. In addition, low viscosities correspond to very high temperatures which require large power consumption which is not desirable due to economical disadvantages.

The manufacturing conditions control the glass melt withdrawal from the reactor at a withdrawal temperature and at a glass melt withdrawal rate, while increasing the withdrawal temperature to control the glass melt withdrawal rate, and/or adjusting a pressure above the glass melt to control the glass melt withdrawal rate.

The temperature of glass melt withdrawal relates to the temperature of the glass melt. The temperature of the glass melt is measurable using suitable temperature probes, e.g. an IR pyrometer, which allow monitoring and controlling the process to the effect that the intended tolerance of the temperature is kept.

In one embodiment of the process, the glass melt is withdrawn at a withdrawal temperature of at least 50 °C above T4, preferably between 50 to 130 °C above T4, with a tolerance of 10 °C, preferably of 5 °C, and most preferably of 3 °C, wherein preferably glass melt withdrawal from the reactor is performed via a drain opening. In one embodiment, the drain opening is a die having a conical inner shape. Advantageously, the die may be designed such and/or used to control the characteristics of a fluid flow of the glass melt as it exits the reactor. A die thus allows to control the withdrawal rate of the glass melt as well as the shape of the glass melt stream that emerges from the reactor. The withdrawal rate of the glass melt may be expressed as a volume flow rate in $ml \cdot min^{-1}$ referring to the volume of glass melt leaving the reactor per time unit.

In one embodiment, the drain opening may be heated. The skilled person is aware that at the high temperatures required for glass production, temperature gradients in the glass melt may arise in the reactor. It is thus of advantage to monitor the temperature of the glass melt in the reactor, optionally including the drain opening, and to control and/or adjust the temperature at the drain opening via independent heating means, if necessary. Such independent heating means may for example be electromagnetic coils. In one embodiment of the process, the withdrawal temperature is increased to control the glass melt withdrawal rate with a tolerance of 2% or less, preferably of 1% or less. In one embodiment of the process, a pressure above the glass melt is adjusted to control the glass melt withdrawal rate with a tolerance of 2% or less, preferably of 1% or less.

In one embodiment of the process, increasing the withdrawal temperature in order to control the glass melt withdrawal rate comprises increasing the withdrawal temperature in temperature increments of 1 °C and increasing the withdrawal temperature by 30 °C, 20 °C, 10 °C, 5 °C, or 3 °C during withdrawal of the glass melt. It is advantageous to control the glass melt withdrawal from the reactor within narrow (volume flow) rate boundaries, and to thus work at a near constant glass mass stream emanating from the reactor, to minimise possible geometrical deviations in the obtained glass rod.

The glass melt withdrawal from the reactor may be described and quantified with a volume flow rate in terms of 'ml·min$^{-1}$'. The rate of glass melt withdrawal from the reactor shall be fairly constant. With respect to a given average rate of withdrawal, a tolerance of 1% means that the highest rate of withdrawal and the lowest rate of withdrawal should not deviate by more than 1% from each other based on the average rate of withdrawal.

It is advantageous to control that the glass melt is withdrawn at a withdrawal temperature of at least 50 °C above T4, with a tolerance of 10 °C, or 5 °C, or 3 °C, because the viscosity has to be large enough to provide for flowing conditions of the glass melt at the step of drawing the glass melt into a rod. At the same time, the temperature deviation of the glass melt at the drawing step has to be kept small, e.g. with a tolerance of 10 °C, or 5 °C, or 3 °C, in order to avoid inhomogeneities in the glass melt composition and the glass melt viscosity. A tolerance of e.g. 10 °C during withdrawal means that the highest and the lowest temperature may not deviate more than 10 °C from each other during the running of a single process for the production of glass rods of one specific glass composition.

In one embodiment, the glass melt is withdrawn at a withdrawal temperature of between 50 to 130 °C above T4, with a tolerance of 10 °C, or 5 °C, or 3 °C. The exact temperature of glass melt withdrawal may depend on the glass composition and the type and geometric features of the reactor. It may be advantageous to control the temperature of glass melt withdrawal within narrow ranges relating to a tolerance of 10 °C, or 5 °C, or 3 °C. This temperature control is normally automated, but may further be controlled by direct operator instructions during manufacture. For example, at the start of a process, it may be or become necessary to reduce the temperature by up to 20 °C, e.g. when the viscosity of the glass composition is too high, and or to implement a feedback-control of up to 50 °C.

In one embodiment, the glass melt is withdrawn at a withdrawal temperature of between 50 to 130 °C above T4, preferably between 55 to 125 °C above T4, more preferably between 60 to 120 °C above T4, more preferably between 65 to 115 °C above T4, even more preferably between 70 to 110 °C above T4, even more preferably between 75 to 105 °C above T4, and most preferably between 80 to 100 °C above T4. In one embodiment, the glass melt is withdrawn at a temperature of 50 °C above T4 or more, preferably 55 °C above T4 or more, more preferably 60 °C above T4 or more, more preferably 65 °C above T4 or more, even more preferably 70 °C above T4 or more, even more preferably 75 °C above T4 or more, and most preferably 80 °C above T4 or more. In one embodiment, the glass melt is withdrawn at a temperature of 130 °C above T4 or less, preferably 125 °C above T4 or less, more preferably 120 °C above T4 or less, more preferably 115 °C above T4 or less, even more preferably 110 °C above T4 or less, even more preferably 105 °C above T4 or less, and most preferably 100 °C above T4 or less.

In one embodiment, glass melt withdrawal from the reactor is performed via a die as a drain opening. A die suitable for glass melt withdrawal comprises an alloy, wherein the alloy comprises 90 wt.% or more of iridium. Advantageously, a die may allow a smooth process of production.

Cooling the glass melt to obtain a glass rod takes place after the glass melt passes the drain opening. Advantageously, process conditions are established such that the average cooling rate of the glass rod is 2000 K·h$^{-1}$ or less, until the T4 temperature is reached, which retains the homogeneity of the glass composition and the uniformity of the glass rod. After the glass melt has been cooled to the T4 temperature, subsequent cooling may proceed at faster cooling rates. In one embodiment, the average cooling rate of the glass rod is 1000 K·h$^{-1}$ or less, preferably 500 K·h$^{-1}$ or less, more preferably 200 K·h$^{-1}$ or less, and most preferably 5 K·h$^{-1}$ or less. In one embodiment, the cooling rate of the glass rod is 1 K·h$^{-1}$ or more, preferably 2 K·h$^{-1}$ or more, and most preferably 3 K·h$^{-1}$ or more. In one embodiment, the cooling rate of the glass rod is 1 K·h$^{-1}$ to 20 K·h$^{-1}$, preferably 2 K·h$^{-1}$ to 15 K·h$^{-1}$, and most preferably 3 K·h$^{-1}$ to 10 K·h$^{-1}$.

Forming the glass melt to obtain a glass rod is mainly effected at the drain opening, i.e. when the glass melt leaves the reactor. In one embodiment, the glass melt has a glass composition with a T4 temperature of 1400 °C or more, wherein T4 is the temperature at which the glass melt composition has a viscosity of 10$^4$ dPa·s. In one embodiment, the glass melt has a glass composition with a T4 temperature of 1400 °C or more, preferably 1450 °C or more, more preferably 1500 °C or more, and most preferably 1550 °C or more. In one embodiment, the glass melt has a glass composition with a T4 temperature of 1900 °C or less, preferably 1850 °C or less, more preferably 1800 °C or less, and most preferably 1750 °C or less. In one embodiment, the glass melt has a glass composition with a T4 temperature of 1400 °C to 1900 °C, preferably 1450 °C to 1850 °C, more preferably 1500 °C to 1800 °C, and most preferably 1550 °C to 1750 °C.

In one embodiment of the process, the withdrawal of the glass melt from the reactor is at a volume flow rate of 15 to 150 ml·min$^{-1}$, preferably 25 to 120 ml·min$^{-1}$, and most preferably 50 to 100 ml·min$^{-1}$. In one embodiment of the process, the withdrawal of the glass melt from the reactor is at a volume flow rate of 15 ml·min$^{-1}$ or more, preferably 25 ml·min$^{-1}$ or more, and most preferably 50 ml·min$^{-1}$ or more. In one embodiment of the process, the withdrawal of the glass melt from the reactor is at a volume flow rate of 150 ml·min$^{-1}$ or less, preferably 120 ml·min$^{-1}$ or less, and most preferably 100 ml·min$^{-1}$ or less.

In one embodiment of the process, optionally being a batch process, the process comprises a further step of discontinuing the withdrawal of the glass melt from the reactor, which is preferably operated as a batch reactor, before a consumption of the glass melt of 90 vol.-% is reached, preferably 80 vol.-%, more preferably 70 vol.-%, even more preferably 60 vol.-%, and most preferably 50 vol.-%. In a batch process, an initial glass melt is prepared and at some point withdrawal of the glass melt from the reactor is allowed to take place. Before the start of withdrawal, the amount of glass melt is 100%, normalised to volume. Consumption of the glass shall be understood as the % amount of glass melt that has been withdrawn from the reactor, i.e. formed into a glass rod. Advantageously, when the process is run in a batch-wise fashion, at least 50 vol.-% of the glass melt from the reactor may be used and formed into glass rods without quality loss.

**Glass composition**

In one embodiment, the glass rod comprises a glass composition comprising one or more or all of the following constituents in percent by weight:

- 70.0% to 90.0% of $SiO_2$,

- 0.0% to 25.0% of $B_2O_3$,

- 0.0% to 10.0% of $Al_2O_3$,

- 0.0% to 10.0% of one or more alkali earth metal oxides,

- 0.0% to 7.0% of one or more alkali metal oxides,

with the provision that $SiO_2$ is always present in the glass composition.

In this disclosure, the reference to a glass and the reference to a glass composition shall be understood as the same subject-matter.

In one embodiment the glass comprises $SiO_2$ in an amount of 70.0% by weight or more, preferably 72.0% by weight or more, more preferably 74.0% by weight or more, even more preferably 76.0% by weight or more, even more preferably 78.0% by weight or more, and most preferably 80.0% by weight or more. In one embodiment the glass comprises $SiO_2$ in an amount of 90.0% by weight or less, preferably 89.0% by weight or less, more preferably 88.0% by weight or less, even more preferably 87.0% by weight or less, and most preferably 86.0% by weight or less. In one embodiment the glass comprises $SiO_2$ in an amount of 70.0% to 90.0% by weight, preferably 72.0% to 89.0% by weight, more preferably 74.0% to 88.0% by weight, even more preferably 76.0% to 87.0% by weight, and most preferably 78.0% to 86.0% by weight.

In one embodiment the glass is a borosilicate glass comprising $SiO_2$ in an amount of 70.0% to 90.0% by weight, preferably 72.0% to 89.0% by weight, more preferably 74.0% to 88.0% by weight, even more preferably 76.0% to 87.0% by weight, and most preferably 78.0% to 86.0% by weight.

In one embodiment the glass comprises one or more or all of the following constituents in percent by weight: 70.0% to 90.0% of $SiO_2$, 0.0% to 25.0% of $B_2O_3$, 0.0% to 10.0% of $Al_2O_3$, 0.0% to 10.0% of one or more alkali earth metal oxides, 0.0% to 7.0% of one or more alkali metal oxides.

In one embodiment the glass comprises one or more or all of the following constituents in percent by weight: 75.0% to 87.0% of $SiO_2$, 8.0% to 22.0% of $B_2O_3$, 1.0% to 7.0% of $Al_2O_3$, 0.25% to 5.0% of one or more alkali earth metal oxides, 0.0% to 5.0% of one or more alkali metal oxides.

In the context of the present invention, alkali metal oxides are meant to include specifically $Li_2O$, $Na_2O$ and $K_2O$, and alkali earth metal oxides are meant to include specifically MgO, CaO, BaO and SrO.

In one embodiment, the glass comprises 0.0% to 10.0% of one or more alkali earth metal oxides, in percent by weight, such as 1.0% to 9.0%, preferably 2.0% to 8.0%, more preferably 3.0% to 7.0%, and most preferably 4.0% to 6.0%.

In one embodiment, the glass comprises 0.0% to 7.0% of one or more alkali metal oxides, in percent by weight, such as 0.5% to 6.5%, preferably 1.0% to 6.0%, more preferably 1.5% to 5.5%, and most preferably 2.0% to 5.0%.

In one embodiment, the glass comprises in percent by weight:

| | |
|---|---|
| $SiO_2$ | 70.0% to 90.0% |
| $B_2O_3$ | >0.0% to 25.0% |
| $Al_2O_3$ | >0.0% to 10.0% |
| BaO | 0.0% to 5.0% |
| CaO | 0.0% to 3.0% |
| $K_2O$ | 0.0% to 5.0% |
| $Na_2O$ | 0.0% to 5.0% |

(continued)

| | |
|---|---|
| $Li_2O$ | 0.0% to 1.0% |

In one embodiment the glass comprises $B_2O_3$ in an amount of 1.0% or more by weight, preferably 2.0% or more by weight, more preferably 4.0% or more by weight, even more preferably 6.0% or more by weight, and most preferably 8.0% or more by weight. In one embodiment the glass comprises $B_2O_3$ in an amount of 25.0% or less by weight, preferably 22.0% or less by weight, more preferably 20.0% or less by weight, even more preferably 18.0% or less by weight, even more preferably 15.0% or less by weight, and most preferably 12.0% or less by weight. In one embodiment the glass comprises $B_2O_3$ in an amount of 1.0% to 25.0% by weight, preferably 2.0% to 22.0% by weight, even more preferably 4.0% to 20.0% by weight, even more preferably 6.0% to 18.0% by weight, and most preferably 8.0% to 15.0% by weight.

In one embodiment the glass comprises $Al_2O_3$ in an amount of 1.0% or more by weight, preferably 2.0% or more by weight, more preferably 3.0% or more by weight, and most preferably 4.0% or more by weight. In one embodiment the glass comprises $Al_2O_3$ in an amount of 10.0% or less by weight, preferably 9.0% or less by weight, more preferably 8.0% or less by weight, even more preferably 7.0% or less by weight, and most preferably 6.0% or less by weight. In one embodiment the glass comprises $Al_2O_3$ in an amount of 0.0% to 10.0% by weight, preferably 1.0% to 9.0% by weight, more preferably 2.0% to 8.0% by weight, even more preferably 3.0% to 7.0% by weight, and most preferably 4.0% to 6.0% by weight.

In one embodiment, the glass comprises 0.0% to 5.0% of BaO, in percent by weight, such as 0.5% to 4.5%, preferably 1.0% to 4.0%, more preferably 1.5% to 3.5%, and most preferably 2.0% to 3.0%, in percent by weight. In one embodiment, the glass comprises 0.0% BaO or more, in percent by weight, preferably 0.5% or more, more preferably 1.0% or more, even more preferably 1.5% or more, and most preferably 2.0% or more, in percent by weight. In one embodiment, the glass comprises 5.0% of BaO or less, in percent by weight, preferably 4.5% or less, more preferably 4.0% or less, even more preferably 3.5% or less, and most preferably 3.0% or less, in percent by weight.

In one embodiment, the glass comprises 0.0% to 3.0% of CaO, in percent by weight, such as 0.2% to 2.8%, 0.4% to 2.6%, 0.6% to 2.4%, 0.8% to 2.2%, or 1.0% to 2.0%. In one embodiment, the glass comprises 0.0% CaO or more, in percent by weight, preferably 0.2% or more, more preferably 0.4% or more, even more preferably 0.6% or more, even more preferably 0.8% or more, and most preferably 1.0% or more, in percent by weight. In one embodiment, the glass comprises 3.0% of CaO or less, in percent by weight, preferably 2.8% or less, more preferably 2.6% or less, even more preferably 2.4% or less, even more preferably 2.2% or less, and most preferably 2.0% or less, in percent by weight.

In one embodiment, the glass comprises 0.0% to 5.0% of $K_2O$, in percent by weight, such as 0.5% to 4.5%, 1.0% to 4.0%, 1.5% to 3.5%, or 2.0% to 3.0%. In one embodiment, the glass comprises 0.0% of $K_2O$ or more, in percent by weight, preferably 0.5% or more, more preferably 1.0% or more, even more preferably 1.5% or more, and most preferably 2.0% or more, in percent by weight. In one embodiment, the glass comprises 5.0% of $K_2O$ or less, in percent by weight, preferably 4.5% or less, more preferably 4.0% or less, even more preferably 3.5% or less, and most preferably 3.0% or less, in percent by weight.

In one embodiment, the glass comprises 0.0% to 5.0% of $Na_2O$, in percent by weight, such as 0.5% to 4.5%, 1.0% to 4.0%, 1.5% to 3.5%, or 2.0% to 3.0%. In an alternative embodiment, the glass comprises 0.0% to 3.0% of $Na_2O$, in percent by weight, such as 0.1% to 2.5%, 0.2% to 2.0%, 0.3% to 1.5%, or 0.4% to 1.0%. In one embodiment, the glass comprises 0.0% of $Na_2O$ or more, in percent by weight, preferably 0.1% or more, more preferably 0.2% or more, even more preferably 0.3% or more, and most preferably 0.4% or more, in percent by weight. In one embodiment, the glass comprises 3.0% of $Na_2O$ or less, in percent by weight, preferably 2.5% or less, more preferably 2.0% or less, even more preferably 1.5% or less, and most preferably 1.0% or less, in percent by weight.

In one embodiment, the glass comprises 0.0% to 1.0% of $Li_2O$, in percent by weight, such as 0.1% to 0.9%, 0.2% to 0.8%, 0.3% to 0.7%, or 0.4% to 0.6%. In one embodiment, the glass comprises 0.0% of $Li_2O$ or more, in percent by weight, preferably 0.1% or more, more preferably 0.2% or more, even more preferably 0.3% or more, and most preferably 0.4% or more, in percent by weight. In one embodiment, the glass comprises 1.0% of $Li_2O$ or less, in percent by weight, preferably 0.9% or less, more preferably 0.8% or less, even more preferably 0.7% or less, and most preferably 0.6% or less, in percent by weight.

In one embodiment, the glass comprises 1000 ppm (by weight) $Fe_2O_3$ or less, preferably 500 ppm (by weight) $Fe_2O_3$ or less, more preferably 200 ppm (by weight) $Fe_2O_3$ or less, even more preferably 100 ppm (by weight) $Fe_2O_3$ or less, even more preferably 50 ppm (by weight) $Fe_2O_3$ or less, and most preferably 20 ppm (by weight) $Fe_2O_3$ or less. In one embodiment, the glass comprises 1 ppm (by weight) $Fe_2O_3$ or more, or 2 ppm (by weight) $Fe_2O_3$ or more, or 3 ppm (by weight) $Fe_2O_3$ or more, or 5 ppm (by weight) $Fe_2O_3$ or more, or 7 ppm (by weight) $Fe_2O_3$ or more, or 10 ppm (by weight) $Fe_2O_3$ or more. In one embodiment, the glass comprises 1 to 1000 ppm (by weight) $Fe_2O_3$, or 2 to 500 ppm (by weight) $Fe_2O_3$, or 3 to 200 ppm (by weight) $Fe_2O_3$, 5 to 100 ppm (by weight) $Fe_2O_3$, or 7 to 50 ppm (by weight) $Fe_2O_3$, or 10 to 20 ppm (by weight) $Fe_2O_3$.

In one embodiment, the glass comprises in percent by weight:

| SiO$_2$ | 75.0% to 87.0% |
|---|---|
| B$_2$O$_3$ | 8.0% to 22.0% |
| Al$_2$O$_3$ | 1.0% to 7.0% |
| BaO | 0.0% to 3.0% |
| CaO | 0.0% to 2.0% |
| K$_2$O | 0.0% to 3.0% |
| Na$_2$O | 0.0% to 3.0% |
| Li$_2$O | 0.0% to 1.0% |

In one embodiment, the glass comprises in percent by weight:

| SiO$_2$ | 77.0% to 87.0% |
|---|---|
| B$_2$O$_3$ | 8.0% to 13.0% |
| Al$_2$O$_3$ | 3.0% to 7.0% |
| BaO | 0.0% to 3.0% |
| CaO | 0.0% to 2.0% |
| K$_2$O | 0.0% to 3.0% |
| Na$_2$O | 0.0% to 1.0% |
| Li$_2$O | 0.0% to 1.0% |

In one embodiment the glass is free of one or more or all of lithium, magnesium, potassium, calcium, sodium, lead, arsenic, antimony.

If this description refers to a glass which is free of a component or does not contain a certain component, or includes the hypothetical case of 0% by weight of that component, it is to be understood that this component may at most be present as an impurity. This means that it is not added in significant quantities and that it is not added intentionally. The term "component" refers to the elemental species as such as well as any molecule containing the element and especially to the oxides of the respective compounds. Non-significant quantities or non-essential amounts are to be understood as less than 100 ppm, preferably less than 50 ppm, and most preferably less than 10 ppm, based on the total weight with respect to all intentionally added components.

In one embodiment, the glass composition has a thermal expansion of $0.95 \cdot 10^{-6}$ to $3.20 \cdot 10^{-6}$ K$^{-1}$, measured in the temperature range of 20 to 300 °C, and determined according to ISO 7991:1987. In one embodiment, the glass composition has a thermal expansion of at least $0.95 \cdot 10^{-6}$ K$^{-1}$, preferably at least $1.00 \cdot 10^{-6}$ K$^{-1}$, more preferably at least $1.05 \cdot 10^{-6}$ K$^{-1}$, even more preferably at least $1.10 \cdot 10^{-6}$ K$^{-1}$, even more preferably at least $1.20 \cdot 10^{-6}$ K$^{-1}$, and most preferably at least $1.50 \cdot 10^{-6}$ K$^{-1}$. In one embodiment, the glass composition has a thermal expansion $3.20 \cdot 10^{-6}$ K$^{-1}$ or less, preferably $3.00 \cdot 10^{-6}$ K$^{-1}$ or less, more preferably $2.70 \cdot 10^{-6}$ K$^{-1}$ or less, even more preferably $2.20 \cdot 10^{-6}$ K$^{-1}$ or less, most preferably $2.00 \cdot 10^{-6}$ K$^{-1}$ or less. In one embodiment, the glass composition has a thermal expansion of $0.95 \cdot 10^{-6}$ to $3.20 \cdot 10^{-6}$ K$^{-1}$, preferably $1.00 \cdot 10^{-6}$ to $3.00 \cdot 10^{-6}$ K$^{-1}$, more preferably $1.05 \cdot 10^{-6}$ to $2.70 \cdot 10^{-6}$ K$^{-1}$, even more preferably $1.10 \cdot 10^{-6}$ to $2.20 \cdot 10^{-6}$ K$^{-1}$, even more preferably $1.20 \cdot 10^{-6}$ to $2.20 \cdot 10^{-6}$ K$^{-1}$, and most preferably $1.50 \cdot 10^{-6}$ to $2.00 \cdot 10^{-6}$ K$^{-1}$.

In one embodiment, the glass composition has a transformation temperature of 600 to 750 °C, measured by ISO 7884-8:1987. In one embodiment, the glass composition has a transformation temperature of at least 600 °C, preferably at least 615 °C, more preferably at least 635 °C, for example at least 650 °C, or at least 680 °C, or at least 695 °C. In one embodiment, the glass composition has a transformation temperature of 750 °C or less, preferably 730 °C or less, and most preferably 710 °C or less. In one embodiment, the glass composition has a transformation temperature of 600 to 750 °C, preferably 615 to 730 °C, and most preferably 635 to 710 °C.

Examples

**Glass compositions**

The following glass compositions 1 to 5 are examples of glass compositions that can be processed into glass rods of this disclosure, which are further characterised by the coefficient of thermal expansion (CTE) and the T4 temperature.

| Composition (wt.-%) | 1 | 2 | 3 | 4 | 5 |
|---|---|---|---|---|---|
| $SiO_2$ | 85.0 | 82.0 | 81.0 | 79.0 | 78.5 |
| $B_2O_3$ | 10.0 | 11.0 | 11.0 | 11.0 | 10.5 |
| $Al_2O_3$ | 4.5 | 5.0 | 5.0 | 5.0 | 5.0 |
| BaO | 0.5 | 1.5 | 2.0 | 2.0 | 2.0 |
| CaO | - | 0.5 | 1.0 | 1.0 | 1.0 |
| $K_2O$ | - | - | <0.2 | 2.0 | 3.0 |
| $Na_2O$ | - | <0.1 | - | - | - |
| $Li_2O$ | - | - | - | - | - |
| $Fe_2O_3$ | < 0.1 | <0.1 | <0.1 | <0.1 | <0.1 |
| **CTE (ppm/K)** | 1.25 | 1.60 | 1.90 | 2.65 | 3.05 |
| **T4 (°C)** | 1710 | 1700 | 1680 | 1605 | 1570 |
| - means that this compound is not detectable in the obtained glass rod | | | | | |

**Glass rod production**

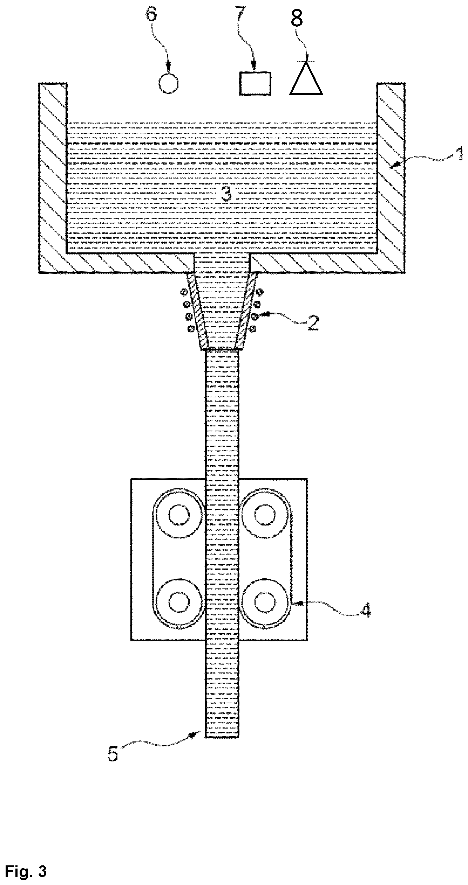

Figure 3 shows a reactor (1) having a lower drain opening (2). Glass raw material is heated in the reactor (1) to obtain a glass melt (3). Conveyor means (4) assist in the drawing of the glass rods (5) downstream of the reactor, i.e. after the glass melt (3) has left the reactor (1) through the lower drain opening (2). The lower drain opening (2) is heated independently (heating for example by electromagnetic coils indicated as circles) to ensure a constant and inform glass flow. The lower drain opening (2) may be a nozzle (herein called "die") or a duct. The withdrawal temperature of the glass melt (3) is measured with an optional IR pyrometer (6). The pressure above the glass melt is measured with an optional pressure sensor (7). The reactor comprises an optional top heater (8), preferably a gas burner, arranged above a melt surface.

A reactor made of a Zr compound with a density of more than 3.0 $g/cm^3$ with a lower drain opening (iridium die) is used for heating glass raw material of composition 1. The glass is heated using a top heater to a temperature of T2.5, kept at this temperature for about 20 hours without stirring or other mechanical agitation and then withdrawn and formed into glass rods. The lower drain opening was an iridium die and had a distance from any wall section of the reactor of about 20 cm. The glass rods were consecutively sorted into trays. The following table presents data obtained from the glass rods:

| Tray No. | $Zr_{max}$ [mg/kg] | $Zr_{avg}$ [mg/kg] | Failure |
|---|---|---|---|
| 5 | 400 | 425 | no |
| 21 | 400 | 375 | no |
| 22 | 5.900 | 590 | yes |

It is evident from the data above that ZrOz concentrations rise throughout withdrawal of the melt from the reactor. The inventors hypothesize that during withdrawal more and more zirconium compounds such as zirconium oxide, zirconium silicate and/or $Zr^{4+}$ ions release from the walls of the reactor into the melt. Initially, the volume portions of glass melt leaving the reactor through the die originate from the middle of the reactor, i.e. rather far away from the walls. With more and more glass melt withdrawn from the reactor, volume portions originating closer to the walls leave the reactor and are formed into glass rods. At some point during withdrawal, volume portions directly adjacent the walls leave the melt through the die. These volume portions bring a streak into the glass rod, comprising $Zr^{4+}$ ions. The amount of $Zr^{4+}$ ions is standardised as the amount of the corresponding oxide and is give as the highest local concentration of $ZrO_2$ $Zr_{max}$.

It is quite surprising that this happens abruptly. In the case of the example, $Zr_{max}$ of the rods in Tray 21 are still good, whereas $Zr_{max}$ rises to very high values in Tray 22.

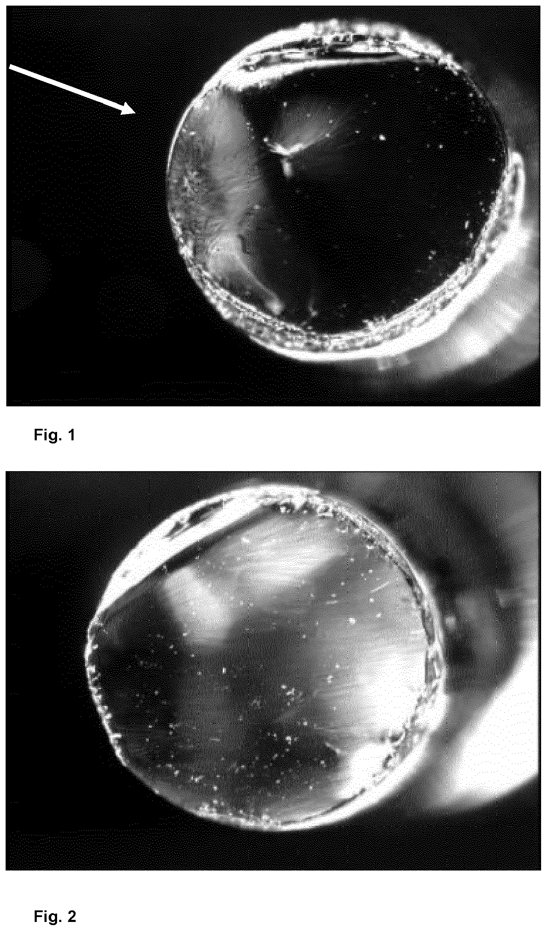

Figure 1 shows a glass rod cross-section under a microscope after tempering the rod for 10 minutes at 1200°C and cooling rod with 2 K/h. This tempering treatment makes portions of very high $ZrO_2$ concentrations visible, which would otherwise remain invisible upon inspection with a microscope. The arrow points to a streak of $ZrO_2$ contamination. It is

considered that these regions of very high $ZrO_2$ concentrations cause mechanical failure when used in flash lamps, possibly because of differing thermal expansion behavior. For comparison, Figure 2 shows a glass rod having undergone the same tempering treatment but with lower $Zr_{max}$.

The inventors found that different measures contribute to achieving a desirable $Zr_{max}/Zr_{avg}$ ratio and low $Zr_{max}$. First, the melt should be allowed to homogenize slowly by keeping the melt for a prolonged period of time, preferably at least 10 hours at a temperature of about T2.5. In addition to that it is beneficial to reduce or preferably avoid mechanical agitation of the glass melt, for example by stirring. Furthermore, using a top burner, preferably a gas burner instead of electrodes helps reducing convection in the glass melt and helps keeping the wall sections at a lower temperature. Additionally, it is advantageous to use not all of the initial melt volume should to make glass rods. Instead, withdrawal should be stopped when an acceptable $Zr_{max}$ is exceeded. Furthermore, it is beneficial to arrange the die through which withdrawal is performed at the bottom of the reactor with a sufficient distance from the walls.

### Measurement of $Zr_{max}$ and $Zr_{avg}$

Sample preparation

The glass rod samples were cut to size using a diamond saw. Afterwards, the sample was grounded and polished to a final dimension of 3 mm. Finally, the sample was cleaned in an ultrasonic bath with ethanol. Loose adhering particles were blown off before measurement.

The following $Zr_{max}$ and $Zr_{avg}$ measurement was used in this disclosure:
$Zr_{max}$ and $Zr_{avg}$ are determined using LA-ICP-MS using a laser beam of $\lambda$ = 213 nm. By means of the laser, material is removed from the specimen and introduced into the ICP-MS in an inert gas stream. The material is evaporated and ionized in the spectrometer at 6000 to 8000°C and then analyzed by MS. The instrument was a Perkin Elmer ICP Mass Spectrometer NexION 300X.

For the sample analyses, 4 ablations with a crater diameter of 100 $\mu$m each were carried out over a depth of approx. 20 $\mu$m. In the LA-ICP-MS analysis, the intensity ratio of the analyte zirconium ($Zr^{90}$) was measured against the intensity of the internal standard (silicon $Si^{28}$) per ablation duration/depth.

The quantification of the measured intensity ratio of the sample was performed against a calibration with different certified solid standards with known zirconium content.

$Zr_{max}$ is determined at the location of the highest local concentration of ZrOz. Three measurements were made and the value with the highest $ZrO_2$ concentration is used for calculating the $Zr_{max}/Zr_{avg}$.

$Zr_{avg}$ is determined by performing at least three different measurements in the edge portion of the glass rod and calculating the mean value thereof.

### Claims

1.    Glass rod having a length $l_{rod}$ from 100 to 1600 mm, and having
a ratio $Zr_{max}/Zr_{avg}$ of a highest local concentration of $ZrO_2$ and an average $ZrO_2$ concentration of less than 8.0, wherein the highest local concentration of $ZrO_2$, $Zr_{max}$, is less than 5,500 ppm.

2.    Glass rod according to claim 1, wherein the average concentration of $ZrO_2$, $Zr_{avg}$, is less than 3,500, preferably less than 2,600 ppm.

3.    Glass rod according to claim 1 or claim 2, wherein

- $Zr_{avg}$ is at least 200 ppm, preferably from 300 ppm to 3,000 ppm, and/or
- $Zr_{max}$ is less than 2,000 ppm, preferably less than 1,000 ppm, and/or
- $Zr_{max}/Zr_{avg}$ is less than 7.0, preferably less than 5.0 and most preferably less than 3.0.

4.    Glass rod according to any one of the preceding claims, comprising less than 100 ppm tungsten and/or molybdenum, and/or less than 10 ppm iridium.

5.    Glass rod according to any one of the preceding claims, comprising at least 70.0 wt.-% $SiO_2$.

6.    Glass rod according to any one of the preceding claims, comprising one or more or all of the following constituents:

- 70.0 to 90.0 wt.-% $SiO_2$,

- 0.0 to 25.0 wt.-% of $B_2O_3$,
- 0.0 to 10.0 wt.-% of $Al_2O_3$,
- 0.0 to 10.0 wt.-% of one or more alkali earth metal oxides,
- 0.0 to 7.0 wt.-% of one or more alkali metal oxides.

7. Glass rod according to any one of the preceding claims, having an transmission, measured over a wavelength range of 350 to 450 nm, of at least 90%, at a reference thickness of 10 mm.

8. Glass rod according to any one of the preceding claims,

wherein the glass rod comprises a central portion and an edge portion, wherein the central portion is defined as the part of the rod located at a distance of less than ½ r from the mass center of a cross section of the rod, wherein r is the radius of the cross section, and wherein the edge portion is defined as the part of the glass rod located at a distance of at least ½ r from the mass center of the cross section of the rod,
wherein a ZrOz concentration in the central portion of the glass rod is larger than a ZrOz concentration in an edge portion of the glass rod.

9. Glass rod according to claim 8, wherein $Zr_{max}$ occurs in the central portion.

10. Glass rod according to any one of the preceding claims, wherein

- length $l_{rod}$ is from 800 to 1100 mm, and
- a thickness of the glass rod is in the range of from 2.0 mm to 5.0 mm, and
- a homogeneity of average linear thermal expansion in a temperature range of from 30 to 300 °C is less than 0.08 ppm/K.

11. A set of glass rods, comprising at least 40 glass rods according to any one of the preceding claims.

12. Use of a glass rod according to any one of claims 1 to 10 for joining a metal article to a glass element.

13. Method of manufacturing a glass rod comprising the steps of

- providing a reactor (1) comprising a lower drain opening (2) and one or more reactor walls surrounding a reactor volume; and
- heating glass raw material in the reactor to obtain a glass melt (3), wherein the glass melt (3) has a glass composition with a T4 temperature of 1400 °C or more, wherein T4 is the temperature at which the glass melt composition has a viscosity of $10^4$ dPa·s; and
- heating the glass melt (3) at least partially to a temperature T2.5, defined as the temperature at which the glass melt (3) has a viscosity of $10^{2.5}$ dPa s, and holding this temperature for a holding time of at least 10 hours; and
- withdrawing the glass melt (3) from the reactor (1); and
- cooling and/or forming the glass melt (3) to obtain one or more glass rods (5) according to any one of claims 1 to 10.

14. Method according to claim 13, wherein

- only up to 90 vol.-%, preferably up to 70 vol.-% and most preferably up to 50 vol.-% of an initial glass melt volume are used for forming the glass melt (3) into the glass rods, and/or
- the lower drain opening (2) is arranged at a distance of at least 10 cm from the reactor walls, and/or
- the glass melt (3) is not stirred during the holding time, and/or
- the glass melt (3) is not stirred during withdrawal, and/or
- the reactor comprises a top heater, preferably a gas burner, arranged above a melt surface.

15. Method according to claim 13 or 14, comprising

- discontinuing withdrawal of the glass melt (3) from the reactor (1) before 90 vol.-%, preferably 70 vol.-% and most preferably 50 vol.-% of an initial glass melt volume are withdrawn; and/or
- heating the glass raw material using a top heater, preferably a gas burner, arranged above a melt surface; and/or
- heating the glass melt (3) using a top heater, preferably a gas burner, arranged above a glass melt surface;

and/or
- withdrawing the glass melt (3) from the reactor comprises predominantly, particularly only, portions of glass melt (3) which have a distance of at least 5 cm from a wall of the reactor (1).

16. Method according to one or more of claims 13 to 15, wherein

- the reactor (1) comprises refractory material, wherein the refractory material comprises zirconium oxide and/or zirconium silicate, wherein optionally the melting furnace is essentially free of molybdenum and/or tungsten and/or iridium; and/or
- wherein a contact surface of the reactor (1), with which the glass melt is in contact, comprises 30 wt.-% or more contact material in the form of a cast zirconia material comprising more than 70 wt.-% $ZrO_2$ and/or a contact surface of the reactor, with which the glass melt (3) is in contact, comprises sintered material with more than 80 wt.-%, preferably more than 90 wt.-%, and most preferably more than 95 wt.% zirconium silicate.

Fig. 1

Fig. 2

Fig. 3

Europäisches
Patentamt

European
Patent Office

Office européen
des brevets

# EUROPEAN SEARCH REPORT

**Application Number**

EP 24 15 9288

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 180 401 A2 (SCHOTT AG [DE]) 17 May 2023 (2023-05-17) * paragraphs [0011] - [0100]; claims; examples; tables * | 1-16 | INV. C03C3/093 C03B5/16 C03C27/02 C03B17/04 |
| | ----- | | |
| A | DE 10 2019 217977 A1 (SCHOTT AG [DE]) 27 May 2021 (2021-05-27) * paragraphs [0009] - [0018]; claims; examples * | 1-16 | |
| | ----- | | |

**TECHNICAL FIELDS SEARCHED (IPC)**

C03C
C03B

The present search report has been drawn up for all claims

| Place of search | Date of completion of the search | Examiner |
|---|---|---|
| Munich | 29 August 2024 | Wrba, Jürgen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 15 9288

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2024

| Patent document cited in search report | Publication date | Patent family member(s) | Publication date |
|---|---|---|---|
| EP 4180401 A2 | 17-05-2023 | CN 115991570 A | 21-04-2023 |
| | | EP 4180401 A2 | 17-05-2023 |
| | | JP 2023061392 A | 01-05-2023 |
| | | US 11958771 B1 | 16-04-2024 |
| DE 102019217977 A1 | 27-05-2021 | CN 114728824 A | 08-07-2022 |
| | | CN 114746369 A | 12-07-2022 |
| | | DE 102019217977 A1 | 27-05-2021 |
| | | EP 4061778 A1 | 28-09-2022 |
| | | EP 4061779 A1 | 28-09-2022 |
| | | JP 2023502858 A | 26-01-2023 |
| | | JP 2023503102 A | 26-01-2023 |
| | | KR 20220107224 A | 02-08-2022 |
| | | US 2022274862 A1 | 01-09-2022 |
| | | US 2022281766 A1 | 08-09-2022 |
| | | WO 2021099553 A1 | 27-05-2021 |
| | | WO 2021099605 A1 | 27-05-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. FRANK** ; **H. SCHOLZE**. *Glastechnische Berichte*, vol. 36 (9), 350